Europäisches Patentamt

European Patent Office

Office européen des brevets

(19)

(11) Veröffentlichungsnummer : **0 033 932**
**B1**

(12) # EUROPÄISCHE PATENTSCHRIFT

(45) Veröffentlichungstag der Patentschrift :
13.06.84

(21) Anmeldenummer : 81100731.9

(22) Anmeldetag : 02.02.81

(51) Int. Cl.³ : **H 04 B 17/02**

(54) **Kombinierte Überwachung und Fehlerortung in Übertragungsstrecken für digitale Signale.**

(30) Priorität : 08.02.80 DE 3004767

(43) Veröffentlichungstag der Anmeldung :
19.08.81 Patentblatt 81/33

(45) Bekanntmachung des Hinweises auf die Patenterteilung : 13.06.84 Patentblatt 84/24

(84) Benannte Vertragsstaaten :
**AT BE CH DE FR GB IT LI NL SE**

(56) Entgegenhaltungen :
**EP-A- 0 013 944**
**DE-B- 2 752 541**
**DE-C- 1 298 553**
**DE-C- 2 004 810**
**DE-C- 2 006 417**
**GB-A- 1 420 078**

(73) Patentinhaber : **SIEMENS AKTIENGESELLSCHAFT**
**Berlin und München Wittelsbacherplatz 2**
**D-8000 München 2 (DE)**

(72) Erfinder : **Gölz, Hubert, Dipl.-Ing.**
**Glatzerstrasse 17**
**D-8034 Germering (DE)**
Erfinder : **Pospischil, Reginhard Dr.-Ing. Dipl.-Ing.**
**Gabriel-von-Seidl-Strasse 15**
**D-8032 Lochham (DE)**

## Beschreibung

Die Erfindung betrifft ein Verfahren zur kombinierten Überwachung und Fehlerortung in Übertragungsstrecken für digitale Signale, bei denen in den Endstellen und den Zwischenregeneratoren eine Überwachung der zu übertragenden digitalen Signale auf Coderegelverletzungen hin erfolgt, bei dem bei der Überwachung in wenigstens einem Zwischenregenerator der Übertragungsstrecke die Anzahl der dabei festgestellten Fehler über einen bestimmten Zeitraum addiert und gespeichert wird und am Ende dieses Zeitraumes der Speicherwert mittels zusätzlicher Meldesignale an eine abfragende Endstelle übermittelt wird.

Übertragungsstrecken für digitale Signale enthalten zwischen zwei Endstellen eine räumlich ausgedehnte Kabelstrecke, in die im Abstand von meist einigen Kilometern Zwischenregeneratoren zur amplitudenmäßigen udn zeitmäßigen Regenerierung der übertragenen Impulse geschaltet sind. Die Zwischenregeneratoren für mehrere Kabel sind dabei in einer unterirdischen Zwischenstelle zusammengefaßt und nicht ohne weiteres der direkten Prüfung zugänglich. Es wurden deshalb eine Reihe von Fehlerortungsverfahren entwickelt, durch die es möglich ist, den fehlerhaften Regenerator bzw. den gestörten Kabelabschnitt von einer Endstelle aus möglichst exakt zu orten.

Die bekannten Fehlerortungsverfahren lassen sich in zwei Gruppen einteilen, nämlich die Fehlerortungsverfahren mit Außerbetriebnahme der Übertragungsstrecke während der Fehlerortung und die Fehlerortungsverfahren, die während des Betriebes einsetzbar sind und deshalb auch als Überwachungsverfahren bezeichnet werden. Zu den eine Außerbetriebnahme der Übertragungsstrecke bedingenden Fehlerortungsverfahren gehören die sogenannten Ortungsverfahren mittels Schleifenschluß in einem Zwischenregenerator, bei denen wiederum zwischen adressenlosen Ortungsverfahren und solchen mit Adresse unterschieden wird. Derartige Schleifenortungsverfahren sind aus den deutschen Bundespatentschriften 1 298 553, 2 006 417, 2 004 810 und der DE-AS 27 52 541 bekannt. Durch geeignete Wahl des verwendeten Ortungssignals und des Anschlusses des Ortungsgerätes im ortenden Leitungsendgerät ist es zwar möglich, alle Übertragungseinrichtungen einschließlich der Leitungsendgeräte vollständig zu erfassen. Nachteilig bei diesen Verfahren ist aber die Außerbetriebnahme der Übertragungsstrecke und außerdem die Notwendigkeit, bei intermittierend auftretenden Fehlern die Fehlersuche über eine längere Zeit auszudehnen.

Dabei ist es durch die vorerwähnte DE-AS 27 52 541 bekannt, zur Einführung eines genau definierten Fehlers in bestimmten periodischen Abständen wenigstens ein Bit des Ortungssignals fehlerhaft auszusenden.

Aus der GB-PS 1 420 078 ist ein Verfahren zur kombinierten Überwachung und Fehlerortung in Übertragungsstrecken für digitale Signale bekannt, wobei die Übertragungsstrecken Endstellen mit dazwischen angeordneten Zwischenregeneratoren enthalten und in den Zwischenregeneratoren eine Überwachung der zu übertragenden digitalen Signale auf wenigstens ein bestimmtes Überwachungskriterium hin erfolgt. Von einer zentralen Überwachungsstelle werden dabei abwechselnd die einzelnen Überwachungsschaltungen mittels Steuersignalen abgefragt. Dabei wird die Anzahl der festgestellten Fehler über einen bestimmten Zeitraum addiert und gespeichert, die ermittelten Speicherwerte können außerdem mit einem voreingestellten Schwellenwert verglichen werden, so daß nur bei Überschreiten des Schwellenwertes ein Fehlersignal an die abfragende Endstelle übermittelt wird. Im Hinblick auf die fehlerfreie Arbeitsweise der Übertragungsstrecken für digitale Signale können bei Abwesenheit äußerer Störungen über längere Zeit von den Überwachungseinrichtungen keine Fehlersignale an die abfragende Endstelle übermittelt werden. Es ist aber auch möglich, daß wegen einer Störung in den Überwachungseinrichtungen trotz Übertragungsfehlern keine Fehlersignale erzeugt werden oder daß die Abfrage- und Übermittlungseinrichtungen für die Fehlermeldung ausgefallen sind. In diesen Fällen wird eine fehlerfreie Übertragungsstrecke vorgetäuscht, wobei die Vortäuschung nicht erkannt werden kann.

Fehlerortungsverfahren während des Betriebes, also sogenannte Überwachungsverfahren, setzen ein Übertragungssignal voraus, das an den Überwachungsstellen überwachbar und damit auswertbar ist. Es ist bekannt, als Überwachungskriterium eine Zusatzinformation, beispielsweise zusätzliche Zeichen in die zu übertragenden digitalen Signale einzufügen, die Synchroninformation der digitalen Signale als Überwachungskriterium zu verwenden oder einen redundanten Code bei der Bildung der digitalen Signale zu verwenden und diese auf die Einhaltung der bei ihrer Bildung verwendeten Coderegel zu überwachen. Entsprechend dem Sinn einer Betriebsuberwachung haben derartige Verfahren den Vorteil, die auftretenden Fehler ohne Betriebsunterbrechung zu orten. Nachteilig ist jedoch, daß auftretende Fehler oder Störungen, die sich im Überwachungskriterium nicht auswirken, also beispielsweise nicht zu einer Coderegelverletzung führen, auch nicht ortbar sind. Dies ist z. B. dann der Fall, wenn ein Regenerator infolge eines Gerätefehlers ständig eine alternierende Impulsfolge abgibt, die der verwendeten Coderegel nicht widerspricht. Bei digitalen Übertragungsstrecken besteht im Hinblick auf die gewünschte Gleichstromfreiheit während der Übertragung oder im Hinblick auf CCITT-Empfehlungen für die digitalen Schnittstellen die Notwendigkeit, in den Leitungsendgeräten die von der digitalen Schnittstelle empfangenen zu übertragenden Signale zu decodieren, anschließend zu verwürfeln und danach in den eigentlichen Übertragungscode, beispielsweise einen Alphabetcode, umzuformen. Empfangsseitig besteht die Notwendigkeit der entsprechenden Rückumwandlungen. Die dafür erforderlichen Teile der Übertragungsstrecke würden jeweils ein anderes Überwachungskriterium erfordern, so daß sich insgesamt eine sehr aufwendige Überwachungseinrichtung ergibt oder aber auf die überwachung dieser Teile verzichtet wird.

Die Aufgabe der Erfindung besteht also darin, ein möglichst wenig aufwendiges Verfahren und eine entsprechende Anordnung zu finden, das die Fehlersuche möglichst ohne oder nur mit geringer Betriebsunterbrechung gestattet, das vom Inhalt der zu übertragenden digitalen Signale unabhängig ist und das die vorerwähnten Nachteile vermeidet.

Erfindungsgemäß wird die Aufgabe dadurch gelöst, daß in die in einer Endstelle in einem Alphabetcode als Leitungscode vorliegenden und außerdem verwürfelten digitalen Signale zur Fehlereinblendungin jeder Verwürfelperiode eine der Coderegel widersprechende weil unzulässig lange Nullfolge eingeblendet wird.

Der besondere Vorteil des erfindungsgemäßen Verfahrens besteht darin, daß es außerdem eine Möglichkeit der Kontrolle des Betriebsüberwachungssystems bietet. Außerdem ergibt sich dadurch die Möglichkeit einer Vorwarnung, da eine Fehlermeldung schon bei einer sehr geringen Fehlerrate abgegeben werden kann.

Wird in der ortenden Endstelle lange Zeit keine Fehlermeldung empfangen, dann kann der Verdacht einer Störung des Überwachungssystems aufkommen. Im Hinblick darauf ist eine Weiterbildung der Erfindung zweckmäßig, bei der die Fehlereinblendung von der sendenden Endstelle unabhängig von einer Fehlermeldung periodisch in gegenüber den Zeiträumen für die Fehlerspeicherung in den Zwischenregeneratoren vergleichsweise sehr langen Zeiträumen erfolgt.

Zweckmäßige Anordnungen zur Durchführung dieses Verfahrens sind in den Ansprüchen 3 und 4 näher erläutert.

Die Erfindung soll im folgenden anhand der Zeichnung näher erläutert werden.

In der Zeichnung zeigt

Figur 1 einen Teil einer Übertragungsstrecke für digitale Signale mit mehreren Zwischenregeneratoren und

Figur 2 einen Teil eines Leitungsendgerätes einer Übertragungsstrecke für digitale Signale.

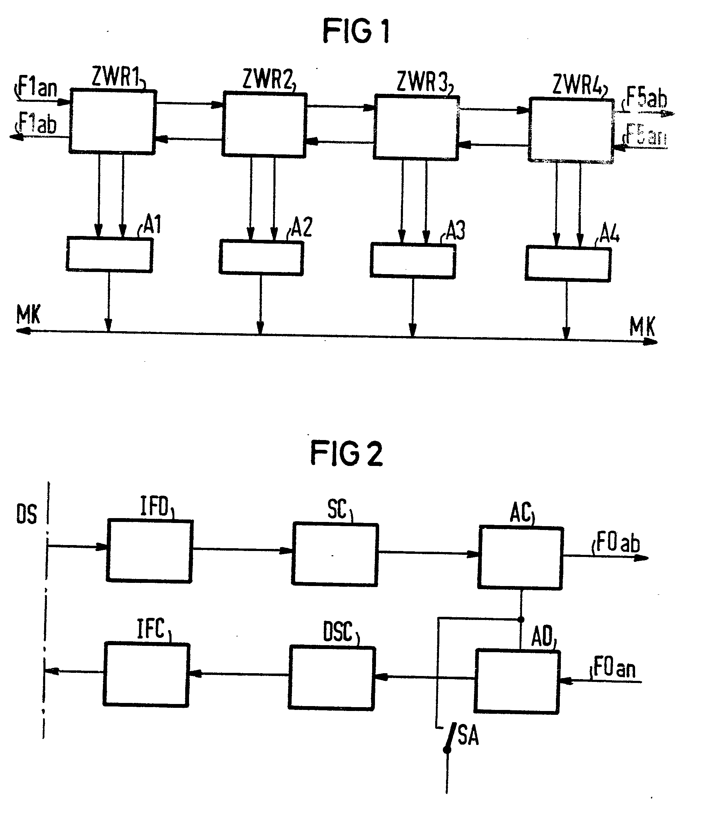

Der in der Fig. 1 dargestellte Streckenteil umfaßt vier Zwischenregeneratoren ZWR1...ZWR4 mit den angeschlossenen Kabelstrecken. Jeder Zwischenregenerator enthält einen Regenerator für jede Übertragungsrichtung. Jedem Zwischenregenerator ist eine Auswerteschaltung A1...A4 zugeordnet, deren beide Eingänge jeweils getrennt mit einem zugeordneten Regenerator verbunden sind. Die Ausgänge der einzelnen Auswerteschaltungen sind mit einem Meldekanal verbunden, der bis zu den beiden Endstellen der Übertragungsstrecke geführt ist.

Im vorliegenden Falle enthält jede Auswerteschaltung A1...A4 zwei Anordnungen zur Prüfung der die Zwischenregeneratoren durchlaufenden Signale auf Coderegelverletzungen. Dazu kann wahlweise ein Schieberegister mit an die einzelnen Stufen angeschlossenem Koinzidenzgatter zur Prüfung auf der Coderegel widersprechende Impulsfolgen oder ein Integrator mit bestimmter Integrationszeitkonstante und nachgeschaltetem Schwellwertschalter zur Feststellung der laufenden digitalen Summe eingesetzt werden. Zur Integration der Fehlermeldungen über eine bestimmte Zeit kann auch mit dem Ausgang des Koinzidenzgatters ein Integrator mit nachgeschaltetem Schwellwertschalter verbunden sein. Die Ausgänge der einzelnen Anordnungen zur Überwachung auf Coderegelverletzungen sind über einen schaltbaren Ausgang mit dem Ausgang der Auswerteschaltung und damit mit dem Meldekanal MK verbunden, der im vorliegenden Falle durch eine bekannte Fernüberwachungseinrichtung vom Typ FB40 realisiert wird. Durch diese Fernüberwachungseinrichtung ist es möglich, die Ausgänge der einzelnen Anordnungen zur Überwachung von Coderegelverletzungen getrennt mit der auswertenden Endstelle zu verbinden und dadurch die Betriebsüberwachung getrennt für die einzelnen Zwischenregeneratoren und innerhalb dieser getrennt für die einzelnen Übertragungsrichtungen vorzunehmen. Derartige Fernwirkeinrichtungen gestatten einerseits die zyklische Abfrage der Ausgänge der einzelnen Anordnungen zur Feststellung von Coderegelverletzungen, andererseits ist es aber auch möglich, bei massivem Überschreiten eines voreingestellten Schwellwertes unabhängig vom Abfragezyklus eine Fehlermeldung zur Zentrale der Fernwirkeinrichtung und damit zur ortenden Endstelle zu übertragen.

Ist, wie in der Fig. 1 dargestellt, jedem Zwischenregenerator eine Auswerteschaltung zugeordnet, dann umfaßt ein Überwachungsabschnitt jeweils die Kabelstrecke vom Ausgang des vorgeschalteten Regenerators bis zum Eingang des überwachten Regenerators und den Stromlauf im überwachten Regenerator bis zum Anschluß der Anordnung zur Feststellung von Coderegelverletzungen. Im normalen Betrieb liegt in diesen Überwachungsabschnitten die Fehlerrate in einer Größenordnung von etwa $10^{-10}$ fehlerhaften Bit pro übertragenem Bit. Die Schwellwertschalter in den einzelnen Auswerteschaltungen können nun so eingestellt werden, daß eine Erhöhung der Fehlerrate um eine Zehnerpotenz zur auswertenden Endstelle gemeldet wird und damit diese bei praktisch noch ungestörter Signalübertragung eine Vorwarnung erhält.

Die gemeldeten Fehler müssen nun aber nicht durch eine Störung im meldenden Überwachungsabschnitt entstanden sein, es ist auch möglich, daß ein vorgeschalteter Regenerator einschließlich der Überwachungs- und Auswerteschaltung gestört ist und deshalb von dieser Stelle keine Fehlermeldung abgegeben wird. Es werden deshalb von der sendenden Endstelle in Reaktion auf eine Fehlermeldung in die zu übertragenden digitalen Signale periodisch Fehler eingeblendet. Die eingeblendeten Fehler werden dann von allen intakten Zwischenregeneratoren mit intakter Auswerteschaltung der jeweiligen Übertragungsrichtung über die Betriebsüberwachung der ortenden Endstelle gemeldet, während von der Fehlerstelle die Fehlermeldung ausbleibt. Dadurch ist eine einfache und sichere Erkennung von Fehlerstellen möglich.

Bei Ausbleiben jeglicher Fehlermeldung kann der Verdacht entstehen, daß die Auswerteschaltungen oder der Meldekanal defekt sind. In diesem Falle werden von der sendenden Endstelle Fehler mit sehr geringer Fehlerrate und damit ohne Störung der zu übertragenden digitalen Signale in diese eingeblendet und eine entsprechende Fehlermeldung abgewartet. Zur Kontrolle des Überwachungssystems kann diese Fehlereinblendung periodisch in vergleichweise großen Zeitabständen automatisch erfolgen.

Die Fehlereinblendung erfolgt in einem in Fig. 2 dargestellten Leitungsendgerät, das zur ortenden Endstelle gehört. Ein derartiges Leitungsendgerät enthält eine erste Reihenschaltung aus einer Schnittstellenschaltung IFD, einem Verwürfler SC und einem Alphabetcodierer AC und eine zweite Reihenschaltung aus einem Alphabetdecodierer AD, einem Entwürfler DSC und einer zweiten Schnittstellenschaltung IFC. Der Eingang der ersten Schnittstellenschaltung IFD ist unmittelbar mit der digitalen Schnittstelle DS verbunden, die den Multiplexteil des Übertragungssystems von Leitungsteil trennt und entsprechend den CCITT-Empfehlungen bzw. den Postnormen bestimmten Vorschriften hinsichtlich des an der Schnittstelle verwendeten Codes und des Signalpegels unterliegt. Die erste Schnittstellenanordnung IFD enthält demzufolge einen Decodierer, der die Signale vom Schnittstellencode in den Binärcode umformt, gegebenenfalls ist auch ein Verstärker oder ein Signalregenerator enthalten. Im Hinblick auf das für das Übertragungssignal geforderte Frequenzspektrum wird das Ausgangssignal der ersten Schnittstellenanordnung im Verwürfler SC mit einer Pseudozufallsfolge mod-2-addiert. Das Ausgangssignal des Verwürflers wird im Alphabetcodierer AC in den für die eigentliche Streckenübertragung vorgesehenen Alphabetcode umgewandelt und verstärkt und danach der Übertragungsstrecke zugeführt.

Die Empfangsseite des in der Fig. 2 dargestellten Leitungsendgerätes enthält eingangsseitig einen Alphabetdecodierer AD, der die Übertragungssignale nach Regenerierung in die binäre Form zurückverwandelt. Durch eine weitere mod-2-Addition mit der sendeseitig verwendeten Pseudozufallsfolge wird im Entwürfler DSC ein unverwürfeltes binäres Signal erzeugt, das in der zweiten Schnittstellenanordnung IFC in den Schnittstellencode umgeformt und an die Schnittstellenbedingung angepaßt wird. Durch eine zusätzliche Schalteinrichtung SA, die mit dem Alphabetcodierer AC und dem Alphabetdecodierer AD verbunden ist, können diese auf eine vom normalen Betrieb abweichende Funktion umgeschaltet werden.

Die Betriebsüberwachung, also die Fehlerortung während des Betriebes, erfolgt mit nicht umgeschalteten Alphabetcodewandlern. Damit können während des Betriebs bereits alle Fehler mit Ausnahme der erwähnten Regeneratorfehler, der Fehler in der Überwachungseinrichtung und von Fehlern in den Leitungsendgeräten erkannt werden. Bei sehr geringen Fehlerraten ist es möglich, die beiden Alphabetcodewandler AC und AD so anzusteuern, daß auch nur eine vergleichsweise geringe Fehlerzahl in die zu übertragenden Signale eingeblendet und dadurch eine gezielte Fehlerortung bei geringfügiger Störung des Übertragungssignals erfolgen kann. Bei Störungen, die zum Streckenausfall führen, ist demgegenüber durch Einblendung einer geringen Zahl von Fehlern keine eindeutige Identifizierung der Fehlerstelle gesichert, andererseits ist es aber wegen des Ausfalls der Nutzsignalübertragung dann auch möglich, ein Signal mit einer vergleichsweise großen Fehlerrate einzublenden. Zu diesem Zweck ist mit der Schalteinrichtung SA ein Generator verbunden, der mit einer Periode von m + n Bits den Alphabetcodierer veranlaßt, nach jeweils einer Unterperiode von m Bits, die nach der Coderegel gesendet werden, n Bits zu senden, deren Folge der Coderegel widerspricht. Zu diesem Zweck wird ein Generator verwendet, dessen Impulsmuster gemeinsam mit dem im Leitungsendgerät eingesetzten Verwürfler SC ein periodisches Signal erzeugt, welches einmal je Periode eine größere Anzahl von Nullbits enthält. Der Leitungswandler gibt dann eine nach der Coderegel unzulässig lange Folge von Nullschritten an die Übertragungsstrecke ab. Dieser Generator kann besonders vorteilhaft gleichzeitig zur Prüfung der Funktionseinheiten des Leitungsendgerätes eingesetzt werden, wenn er in einem in das Leitungsgerät integrierten Ortungsgerät untergebracht ist, das gleichzeitig einen Empfänger mit spezieller Auswertung für das gesendete Impulsmuster enthält.

Das in der Fig. 2 dargestellte Leitungsendgerät ist auch auf der dem Ortungsgerät fernen Seite an die Übertragungsstrecke angeschlossen. Dies kann eine Stelle sein, die von dem Ortungsgerät der anderen Seite mit überwacht werden soll. Zu diesem Zweck enthält dieses Leitungsendgerät in der zweiten Schnittstellenanordnung zusätzlich einen Empfänger, der bei Auftreten einer der Coderegel widersprechenden größeren Anzahl von Nullschritten einen Schleifenschluß zur ersten Schnittstellenanordnung schaltet und dabei außerdem den entsprechenden Alphabetcodierer im fernen Leitungsendgerät in den Ortungsbetrieb umschaltet. Dadurch ist es möglich, von einer Seite der Übertragungsstrecke aus vom nahen Leitungsendgerät auch das ferne Leitungsendgerät vollständig zu überprüfen.

**Ansprüche**

1. Verfahren zur kombinierten Überwachung und Fehlerortung in Übertragungsstrecken für digitale Signale, bei denen in den Endstellen und den Zwischenregeneratoren eine Überwachung der zu übertragenden digitalen Signale auf Coderegelverletzungen hin erfolgt, bei dem bei der Überwachung in wenigstens einem Zwischenregenerator der Übertragungsstrecke die Anzahl der dabei festgestellten Fehler über einen bestimmten Zeitraum addiert und gespeichert wird und am Ende dieses Zeitraumes der Speicherwert mittels zusätzlicher Meldesignale an eine abfragende Endstelle übermittelt wird, dadurch gekennzeichnet, daß in die in einer Endstelle in einem Alphabetcode als Leitungscode vorliegenden und vorher verwürfelten digitalen Signale zur Fehlereinblendung in jeder Verwürfelperiode eine der Coderegel widersprechende, weil unzulässig lange Nullfolge eingeblendet wird.

2. Verfahren nach Anspruch 1, dadurch gekennzeichnet, daß die Fehlereinblendung von der sendenden Endstelle unabhängig von einer Fehlermeldung periodisch in gegenüber den Zeiträumen für die Fehlerspeicherung in den Zwischenregeneratoren vergleichsweise sehr langen Zeiträumen erfolgt.

3. Anordnung zur Durchführung des Verfahrens nach Anspruch 1 oder 2 mit einem Leitungsendgerät, das sendeseitig einen Schnittstellendecodierer (IFD), einen daran angeschlossenen Verwürfler (SC) und einen mit dessen Ausgang verbundenen umschaltbaren Alphabetcodierer (AC) und empfangsseitig einen entsprechenden umschaltbaren Alphabetdecodierer (AD), einen Entwürfler (DSC) und eine weitere Schnittstellenschaltung (IFC) enthält, dadurch gekennzeichnet, daß ein Generator vorgesehen ist, der einem in das Leitungsendgerät integrierten Ortungsgerät zugeordnet ist, der als Pseudozufallsgenerator ausgebildet ist und der im Zusammenwirken mit dem im Leitungsendgerät eingesetzten Verwürfler (SC) ein periodisches Signal erzeugt, welches einmal in jeder Periode eine größere Anzahl von Nullbits enthält, daß bei Erzeugung dieses Signals der nachgeschaltete Alphabetcodierer (AC) umgeschaltet wird und eine nach der Regel für den verwendeten Alphabetcode unzulässig lange Nullfolge abgibt.

4. Anordnung nach Anspruch 3, dadurch gekennzeichnet, daß der Empfangsteil eines fernen Leitungsendgerätes bei Empfang einer nach der Coderegel unzulässig langen Nullfolge einen Schleifenschluß auf der der Leitungsseite abgewandten Seite des entfernten Leitungsendgerätes steuert und den Alphabetcodierer der Gegenrichtung so umschaltet, daß dieser eine nach der Coderegel unzulässig lange Nullfolge abgibt.

**Claims**

1. Method for combining monitoring and fault location in transmission links for digital signals, wherein at the end stations and the intermediate re-generators the digital signals which are to be transmitted are monitored in order to detect code rule infringements, wherein during the monitoring, in at least one intermediate regenerator of the transmission link, the number of established faults is added and stored over a specified period of time and at the end of this period of time the stored value is conveyed to an interrogating end station by means of additional message signals, characterised in that for gating-in faults in each scrambling period, a zero sequence which is contrary to the code rule, since it is impermissibly long, is gated into the scrambled signals occurring in an end station in an alphabet code as line code.

2. Method as claimed in claim 1, characterised in that the gating-in of faults by the transmitting end station takes place, independently of a fault message, periodically at intervals of time which are very long in comparison with the periods of time for the fault storage in the intermediate regenerators.

3. Arrangement for the implementation of the method claimed in claim 1 or 2, with a line terminating device which at the transmitting end includes an interface decoder (IFD), a scrambler (SC) connected thereto and an alphabet coder (AC) with switch-over means connected to the output of the scrambler, and at the receiving end includes a corresponding alphabet decoder (AD) with switch-over means, a descrambler (DSC) and a further interface circuit (IFC), characterised in that a generator is provided which is assigned to a locating device integrated into the line terminating device, which comprises a pseudo-random generator, and which, in cooperation with the scrambler (SC) contained in the line terminating device, generates a periodic signal which, once in each period, includes a larger number of zero bits, that when this signal is produced the following alphabet coder (AC) is switched over and emits a zero sequence which is impermissibly long according to the rule governing the alphabet code in use.

4. Arrangement as claimed in claim 3, characterised in that when a zero sequence is received which according to the code rule is impermissibly long, the receiving component of a remote line terminating device controls a loop closure on that side of the remote line terminating device facing away from the line side and switches over the alphabet coder for the opposite direction in such manner that this emits a zero sequence which according to the code rule is impermissibly long.

**Revendications**

1. Procédé pour réaliser de façon combinée le contrôle et la localisation de défauts dans des voies de transmission pour signaux numériques, dans lesquelles un contrôle des signaux numériques devant être transmis, en ce qui concerne la violation de la règle de code, s'effectue dans les postes terminaux et dans les régénérateurs intermédiaires, et selon lequel, lors du contrôle dans au moins un régénérateur intermédiaire de la voie de transmission, le nombre des défauts déterminés pendant un intervalle de temps déterminé est cumulé et mémorisé et, à la fin de cet intervalle de temps, la valeur en mémoire est transférée au moyen de signaux supplémentaires de signalisation à un poste terminal interrogateur, caractérisé par le fait qu'une suite de zéros, qui est incompatible avec la règle de code parce qu'étant d'une longueur inadmissible, est insérée dans les signaux numériques, qui sont présents selon un code alphabétique servant de code de ligne dans un poste terminal et sont précédemment brouillés, pour réaliser l'insertion de défauts au cours de chaque période de brouillage.

2. Procédé suivant la revendication 1, caractérisé par le fait que l'insertion de défauts est effectuée, à partir du poste terminal émetteur, indépendamment d'une signalisation de défauts, périodiquement dans des intervalles de temps comparativement très longs par rapport aux intervalles de temps utilisés pour la mémorisation des défauts dans les régénérateurs intermédiaires.

3. Dispositif pour la mise en œuvre du procédé suivant la revendication 1 ou 2, comportant un appareil terminal de ligne, qui contient, du côté émission, un codeur d'interface (IFD), un brouilleur (SC) raccordé à ce codeur et un codeur alphabétique commutable (AC) relié à la sortie de ce brouilleur, et, du côté réception, un décodeur alphabétique commutable (AD) correspondant, un décrypteur (DSC) et un autre circuit d'interface (IFC), caractérisé par le fait qu'il est prévu un générateur qui est associé à un appareil de localisation intégré dans l'appareil terminal de ligne et qui est constitué sous la forme d'un générateur de signaux pseudo-aléatoires et produit, en coopération avec le brouilleur (SC) disposé dans l'appareil terminal de ligne, un signal périodique qui contient une fois par période un nombre assez élevé de bits nuls, et que, lors de la production de ce signal, le codeur alphabétique (AC) branché en aval est commuté et délivre une suite de zéros d'une longueur inadmissible d'après la règle du code alphabétique utilisée.

4. Dispositif suivant la revendication 3, caractérisé par le fait que, lors de la réception d'une suite de zéros d'une longueur inadmissible conformément à la règle du code, la partie réception d'un appareil terminal de ligne éloigné commande une fermeture de boucle sur le côté, situé à l'opposé du côté de la ligne, de l'appareil terminal de ligne éloigné et commute le codeur alphabétique de la direction opposée de telle sorte que ce codeur délivre une suite de zéros d'une longueur inadmissible d'après la règle du code.

# FIG 1

# FIG 2